# EUROPEAN PATENT SPECIFICATION

(11) **EP 3 111 775 B1**
(45) Date of publication and mention of the grant of the patent: **09.01.2019**
(21) Application number: 15751844.0
(22) Date of filing: 24.02.2015
(51) Int. Cl.: A23L 2/54, A23L 2/56, A23L 27/30, A23L 2/60

(54) **CARBONATED BEVERAGE CONTAINING HIGH-INTENSITY SWEETENER**
KOHLENSÄUREHALTIGES GETRÄNK MIT HOCHINTENSIVEM SÜSSSTOFF
BOISSON GAZEUSE CONTENANT UN ÉDULCORANT À HAUTE INTENSITÉ

(30) Priority: 24.02.2014 JP 2014033432
(43) Date of publication of application: 04.01.2017
(73) Proprietor: Suntory Holdings Limited, Kita-ku, Osaka-shi Osaka 530-8203 (JP)
(72) Inventor: SUZURI, Ryota, Kawasaki-shi Kanagawa 211-0067 (JP); TAKAHASHI, Mizuho, Kawasaki-shi Kanagawa 211-0067 (JP)
(74) Representative: Vossius & Partner Patentanwälte Rechtsanwälte mbB
(86) International application number: PCT/JP2015/055190
(87) International publication number: WO 2015/125967

(56) References cited:
- WO-A1-2009/035047
- JP-A- 2003 144 086
- JP-A- 2003 144 086
- JP-A- 2011 103 858
- JP-A- 2011 103 858
- JP-U- 3 086 084
- US-A1- 2011 033 596
- 'Zero Real Cola' GNPD, [Online] July 2013, XP055357876 Retrieved from the Internet: <URL:HTTP://WWW.GNPD.COM/SINATRA/RECORDPAGE /2117996/FROM_SEARCH/4K39KCIWWU> [retrieved on 2015-05-25]
- 'Real Diet Cola' GNPD, [Online] August 2008, XP055357878 Retrieved from the Internet: <URL:HTTP://WWW.GNPD.COM/SINATRA/RECORDPAGE /962481/FROM_SEARCH/4K39KCIWWU> [retrieved on 2015-05-25]

## Description

### TECHNICAL FIELD

The present invention relates to a carbonated beverage containing a high-intensity sweetener, and a method for producing the same.

### BACKGROUND ART

As disclosed in Patent Literature 1, high-intensity sweeteners are characterized as low-calorie sweeteners but are known to have room for improvement due to various reasons, for example: beverages incorporating such a sweetener are lacking in body sensation.

### CITATION LIST

### PATENT LITERATURE

JP 2010-142129 discloses carbonated beverages with stable flavor containing aspartame or stevia extract. JP 2011 103858 A describes aspartame with high intensity sweetener (optionally stevia) and ginger in sterilized carbonated low-calorie JP 2003 144086 describes the use of aspartame and optionally stevia extract with several flavors from long list including cinnamon, also in beverages US 2011/033596 describes the use of aspartame with stevia with several flavors from long list including cinnamon, use in carbonated beverages.

### SUMMARY OF INVENTION

### TECHNICAL PROBLEM

In carbonated beverages, a cinnamon flavor is added to them for the purpose of giving them the cinnamon flavor characteristic of ginger ale. In recent years, there has been an increasing demand for low-calorie beverages produced using a high-intensity sweetener instead of sugar. However, it has been newly found that in the course of production of beverages containg a high-intensity sweetener, cinnamaldehyde contained in a cinnamon flavor is susceptible to heat deterioration typically caused by heat sterilization, and temporal deterioration during storage, although such deteriorations do not occur in sugar-containing beverages.

Thus, the object of the present invention is to provide a carbonated beverage comprising high-intensity sweeteners, in which cinnamaldehyde and the total taste balance are stably maintained.

### SOLUTION TO PROBLEM

In order to solve the problems, the present inventors focused on the influences of various components incorporated in a carbonated beverage comprising a high-intensity sweetener on its flavor. As a result of intensive studies, the inventors found that when not only cinnamaldehyde and a stevia extract as a high-intensity sweetener are incorporated in a carbonated beverage in the specified ranges of concentration, but also aspartame as a further high-intensity sweetener is incorporated in the beverage, the heat stability and storage stability of cinnamaldehyde are improved, a carbonation sensation and a refreshing sensation are imparted to the beverage, and also the total taste balance of the beverage is enhanced. The inventors have completed the present invention based on this finding. This invention provides the following, without limitation.
1. A carbonated beverage comprising cinnamaldehyde and high-intensity sweeteners, wherein at least aspartame and a stevia extract are contained as the high-intensity sweeteners, and wherein total steviosides are contained as the stevia extract. 2. The carbonated beverage according to claim 1, wherein the total steviosides are contained as the stevia extract at a concentration of 0.6 ppm to 50 ppm. 3. The carbonated beverage according to claim 1 or 2, wherein the cinnamaldehyde is contained at a concentration of 0.25 ppm to 16 ppm. 4. The carbonated beverage according to any one of claims 1 to 3, wherein the cinnamaldehyde is contained at a concentration of 1.0 ppm to 10 ppm. 5. The carbonated beverage according to any one of claims 1 to 4, wherein the carbonated beverage is a low-calorie beverage. 6. The carbonated beverage according to any one of claims 1 to 5, wherein the carbonated beverage has a pH of not more than 3.3. 7. The carbonated beverage according to any one of claims 1 to 6, wherein the aspartame is contained at a concentration of not less than 0.05 g/L. 8. A method for producing a low-calorie carbonated beverage, the method comprising the steps of: dissolving cinnamaldehyde and high-intensity sweeteners in water, wherein the high-intensity sweeteners comprise at least aspartame and a stevia extract, and wherein the stevia extract comprises total steviosides, and performing sterilization.

### ADVANTAGEOUS EFFECTS OF INVENTION

According to the present invention, the heat stability and storage stability of cinnamaldehyde are improved, a carbonation sensation and a refreshing sensation are imparted to a carbonated beverage, and also the total taste balance of the beverage is enhanced. Also, in spite of the fact that aspartame is low in stability at low pH, a reason that the inventive beverage having a low pH maintains its sweetness and body sensation may be because a stevia extract complements the effects of aspartame.

The aforementioned effects of combining the particular componentscinnamaldehyde, a stevia extract, and aspartame -- are unknown and completely unexpected.

### DESCRIPTION OF EMBODIMENTS

### <Beverage>

The invention is defined by the claims.

The carbonated beverage of the present invention comprises cinnamaldehyde and high-intensity sweeteners. High-intensity sweeteners are widely used in diet foods and other products. In the beverage field, high-intensity sweeteners are used as ingredients in low-calorie beverages, such as reduced calorie beverages (containing less than 20 kcal per 100 mL) and zero-calorie beverages (containing less than 5 kcal per 100 mL), and in no-sugar beverages. The inventive carbonated beverage is preferably a zero-calorie carbonated beverage containing less than 5 kcal per 100 mL.

As referred to herein, the "carbonated beverage" refers to a beverage produced by providing an aqueous solution of high-intensity sweeteners, with optionally adding a fruit juice, a plant extract, a dairy product, a flavor, and/or the like, injecting carbon dioxide gas into the mixture, and packing the mixture in a container. Unless otherwise specified, the gas pressure as referred to herein in relation to a carbonated beverage refers to a gas pressure in a container. The gas pressure can be measured by any method well known to those skilled in the art. To cite a specific example, the gas pressure can be measured as follows: a container containing a beverage kept at 20°C is fitted to an internal gas pressure gauge, then, once the stopcock of the internal gas pressure gauge is opened for degassing, the stopcock is closed again, and the internal gas pressure gauge is swung to take a reading at the time when the pointer reaches the specified position. When the inventive beverage is a carbonated beverage, the gas pressure can be set to be in the range of 0.7 kg/cm² to 5.0 kg/cm², preferably 1.0 kg/cm² to 4.0 kg/cm².

As referred to herein, the "high-intensity sweetener" refers to a sweetener having more intense sweetness than sugar (*e.g.,* a degree of sweetness 100 times higher than sugar). As the high-intensity sweeteners, natural sweeteners and synthetic sweeteners can be used. Examples of those sweeteners include: peptide sweeteners such as aspartame, neotame, and alitame; glycosidic sweeteners such as stevia extract and glycyrrhiza extract; sucrose derivatives such as sucralose; and synthetic sweeteners such as acesulfame potassium and saccharin.

In the present invention, it is sufficient that at least aspartame and a stevia extract be incorporated as high-intensity sweeteners in a carbonated beverage -- other high-intensity sweeteners may or may not be added. For example, aspartame and a stevia extract in combination with acesulfame potassium and sucralose may be used as high-intensity sweeteners. In this invention, when either aspartame or a stevia extract is not incorporated in a carbonated beverage, the deterioration of cinnamaldehyde caused by heat treatment like sterilization, and the temporal deterioration of cinnamaldehyde during storage cannot be effectively reduced, so that no favorable cinnamon flavor sensation can be imparted to the carbonated beverage. Furthermore, the total taste balance of the beverage after heat treatment like sterilization and during storage cannot be maintained satisfactorily.

The concentration of aspartame in the inventive carbonated beverage can be set to be in the range of 0.05 g/L to 0.35 g/L. In order to prevent the heat deterioration and temporal deterioration during storage of cinnamaldehyde in a carbonated beverage, maintain a cinnamon flavor sensation, and keep the total taste balance of the beverage, it is sufficient that aspartame be incorporated at a concentration of not less than 0.05 g/L; however, if aspartame is present at too high a concentration, it may have an impact on the total taste balance. In that case, the upper limit of aspartame concentration can be set to 0.35 g/L. Measurement of high-intensity sweeteners can be made by a method known to those skilled in the art. For example, the measurement can be made using liquid chromatography by establishing the following conditions:
Column: Silica Gel NH₂;
Column temperature: 40°C;
Mobile phase: Acetonitrile containing 1 vol% of a phosphoric acid/phosphoric acid mixture (6:4);
Flow rate: 1.0 mL/min.;
Detection wavelength: 210 nm (for aspartame), 230 nm (for acesulfame potassium).

The concentration of a stevia extract in the inventive carbonated beverage is in the range of 0.6 ppm (wt/vol) to 50 ppm (wt/vol), preferably 0.6 ppm (wt/vol) to 25 ppm (wt/vol), in terms of the amount of total steviosides. In order to prevent the heat deterioration and temporal deterioration during storage of cinnamaldehyde in a carbonated beverage, maintain a cinnamon flavor sensation, and keep the total taste balance of the beverage, it is sufficient that total steviosides be incorporated at a concentration of not less than 0.6 ppm. However, if total steviosides are present at too high a concentration, they may have an impact on the total taste balance; thus, the upper limit of concentration of total steviosides is set to 50 ppm.

The "stevia extract" as referred to in the present invention refers to an extract from dried leaves of stevia (*Stevia rebaudiana* Bertoni), which comprises at least one of sweetness components, such as stevioside, rebaudiosides (including rebaudioside A, rebaudioside B, rebaudioside C, rebaudioside D, rebaudioside D2, rebaudioside E, rebaudioside F, rebaudioside G, rebaudioside H, rebaudioside I, rebaudioside J, rebaudioside K, rebaudioside L, rebaudioside M, rebaudioside M2, rebaudioside N, and rebaudioside O), and dulcoside A. The "total steviosides" as referred to in this invention is a name that encompasses stevioside, rebaudiosides (including rebaudioside A, rebaudioside B, rebaudioside C, rebaudioside D, rebaudioside D2, rebaudioside E, rebaudioside F, rebaudioside G, rebaudioside H, rebaudioside I, rebaudioside J, rebaudioside K, rebaudioside L, rebaudioside M, rebaudioside M2, rebaudioside N, and rebaudioside O), dulcoside A, dulcoside B, and the like. The amount of total steviosides refers to the total amount of stevioside, rebaudiosides (including rebaudioside A, rebaudioside B, rebaudioside C, rebaudioside D, rebaudioside D2, rebaudioside E, rebaudioside F, rebaudioside G, rebaudioside H, rebaudioside I, rebaudioside J, rebaudioside K, rebaudioside L, rebaudioside M, rebaudioside M2, rebaudioside N, and rebaudioside O), dulcoside A, dulcoside B, and the like. In this invention, the stevia extract may be incorporated in a carbonated beverage as it is, or one or more particular components separated and purified from the stevia extract may be incorporated in a carbonated beverage as a stevia extract. For example, stevioside and/or rebaudioside A can be separated and purified by treating the stevia extract with a solvent like methanol, and then incorporated in the inventive carbonated beverage as a stevia extract. Alternatively, the stevia extract may be treated with an enzyme and the treated extract (enzymatically treated stevia) may be incorporated in the inventive carbonated beverage. In one embodiment, the stevia extract can be treated with α-glucosyltransferase and the resulting α-glucosylated stevia extract (α-glucosyltransferase-treated stevia) can be incorporated in the inventive carbonated beverage as a stevia extract. In another embodiment, the stevia extract can be obtained by chemically synthesizing rebaudioside A and/or rebaudioside B. The concentration of a stevia extract can be identified by focusing on total steviosides contained in a carbonated beverage. Measurement of total steviosides as a stevia extract can be made by the following method, for example.

First, 1 to 2 g of a stevia extract is measured out, and water is added to give a volume of 20 mL. 5 mL of the solution is measured out and gently injected into a cleanup cartridge column (octadecylsilylated silica gel mini-column, Sep-Pak Plus C18). Then, the column is washed with 5 mL of water and 5 mL of 10% acetonitrile, and eluted with a 40% acetonitrile solution. After 20 mL of ethanol is added to the eluate, and then the eluate is subjected to sonication for 10 minutes, followed by vacuum concentration. To the resulting concentrate, 10 mL of 50% sulfuric acid is added, and the mixture is hydrolyzed in boiling water for 30 minutes. After the sample is cooled, water is added to give a volume of 20 mL. 10 mL of the solution is measured out and gently injected into a cleanup cartridge column (octadecylsilylated silica gel mini-column, Sep-Pak Plus C18). The column is washed with 10 mL of water four times and eluted with 10 mL of an acetonitrile solution. Then, the eluate is further concentrated under vacuum, and acetonitrile is added to give a volume of 5 mL. The solution is quantified by liquid chromatography-mass spectrometry (liquid chromatograph: Agilent 1100 Series G1312A BinPump), whereby total steviosides can be measured. In the present invention, measurement of total steviosides is made by the aforementioned method. Alternatively, total steviosides may be determined by summing up an enzymatically treated stevioside and a stevioside which is quantified and detected according to the analysis method described in Standard Methods of Analysis in Food Safety Regulation -- Food Additives, 2003, Chapter 19 "Existing Additives", Section 105 "Stevia Extract, α-Glucosyltransferase-Treated Stevia, and Fructosyltransferase-Treated Stevia".

Cinnamaldehyde (C₆H₅CH=CH-CHO; molecular weight: 132.16) is one of aromatic aldehydes, which is a cinnamon aroma component and is available as a flavoring preparation. In the present invention, cinnamaldehyde can be incorporated in a carbonated beverage so as to give a concentration within the specified range. For example, the concentration of cinnamaldehyde in the inventive carbonated beverage can be set to be in the range of 0.25 ppm (vol/vol) to 16 ppm (vol/vol), or 0.5 ppm (vol/vol) to 16 ppm (vol/vol), preferably 1.0 ppm to 10 ppm, more preferably 1.0 ppm to 5.0 ppm. When the cinnamaldehyde concentration in the carbonated beverage is lower than 0.25 ppm, the deterioration of cinnamaldehyde by heat treatment like sterilization, and the temporal deterioration of cinnamaldehyde during storage cannot be reduced, and the beverage cannot maintain either its cinnamon flavor sensation or its total taste balance satisfactorily. On the other hand, when the cinnamaldehyde concentration in the carbonated beverage is higher than 16 ppm, the deterioration of cinnamaldehyde by heat treatment like sterilization is reduced and the beverage can maintain its cinnamon flavor sensation satisfactorily, but the total taste balance of the beverage is affected by cinnamaldehyde. Cinnamaldehyde can be measured by a method well known to those skilled in the art, for example, by a method using gas chromatography, mass spectroscopy, or the like.

As referred to herein, the "flavor sensation" refers to the sensation of cinnamon flavor. The cinnamon flavor sensation is derived from cinnamaldehyde. As referred to herein, the "total taste balance" refers to taste balance that can be perceived from the whole of a carbonated beverage. The taste balance as referred to here means a carbonation sensation, a refreshing sensation, and sweetness. The flavor sensation and total taste balance can be evaluated by sensory test conducted by well-trained panelists.

The carbonated beverage of the present invention can be adjusted to an acidic pH of 2.5 to 3.3, preferably 2.5 to 3.0. In general, when the pH of a carbonated beverage comprising high-intensity sweeteners is low, aspartame is low in stability, so that it presumably does not fully exhibit its effects (sweetness and body sensation). However, the inventive carbonated beverage uses a stevia extract and aspartame in combination, whereby even when the pH of the carbonated beverage is low, the beverage can maintain its sweetness and body sensation for a long time, and besides, the obtained carbonation sensation, refreshing sensation, and sweetness can be further enhanced.

### EXAMPLES

The present invention will be described below by way of specific examples. The specific examples presented herein are intended merely to facilitate an understanding of this invention, and not to limit the scope of this invention to these examples.

Unless otherwise specified, the ingredients used in the specific examples given below are usable as food additives and commercially available.

### [Test Example 1]

The concentration of total steviosides as a stevia extract in a carbonated beverage was varied to investigate the effect of the stevia extract on the flavor of the carbonated beverage.

According to the formulation shown in Table 1, the following carbonated beverages were prepared: a carbonated beverage incorporating not a high-intensity sweetener but sugar (sugar-containing carbonated beverage); a zero-calorie carbonated beverage incorporating high-intensity sweeteners (control carbonated beverage); and zero-calorie carbonated beverages incorporating a stevia extract. The concentrations of each component in Table 1 are expressed as concentrations per liter of a carbonated beverage. As aspartame, "PAL SWEET DIET G-100" (aspartame content: 99.5%) produced by Ajinomoto Healthy Supply Co., Inc. was added. As a stevia extract, SK SWEET® Z3 (a-glucosyltransferase-treated stevia produced by Nippon Paper Industries Co., Ltd.) was used. As a cinnamon flavor, a cinnamon flavor product containing 120 ppm of cinnamaldehyde was used. The samples were adjusted to a gas pressure of about 2.0 kg/cm², filled in bottles, and sealed.

The thus-prepared carbonated beverages were used for evaluation as "unsterilized" carbonated beverages. Further, the unsterilized carbonated beverages were treated at 75°C for 10 minutes and then cooled. The resulting samples were used for evaluation as "sterilized" carbonated beverages. All of the beverages prepared in this test example were adjusted to pH 2.8.

Each beverage prepared was subjected to sensory evaluation. Three expert panelists evaluated the beverages for their cinnamon flavor sensation and total taste balance according to the criteria defined below.

### [Flavor sensation]

○: No deterioration in cinnamon flavor is perceived.
Δ: A slight deterioration in cinnamon flavor is perceived.
×: Deterioration in cinnamon flavor is perceived.

### [Total taste balance]

○: Carbonation sensation, refreshing sensation, and sweetness are well balanced.
Δ: Carbonation sensation, refreshing sensation, and sweetness are not so well balanced.
X: Carbonation sensation, refreshing sensation, and sweetness are poorly balanced.

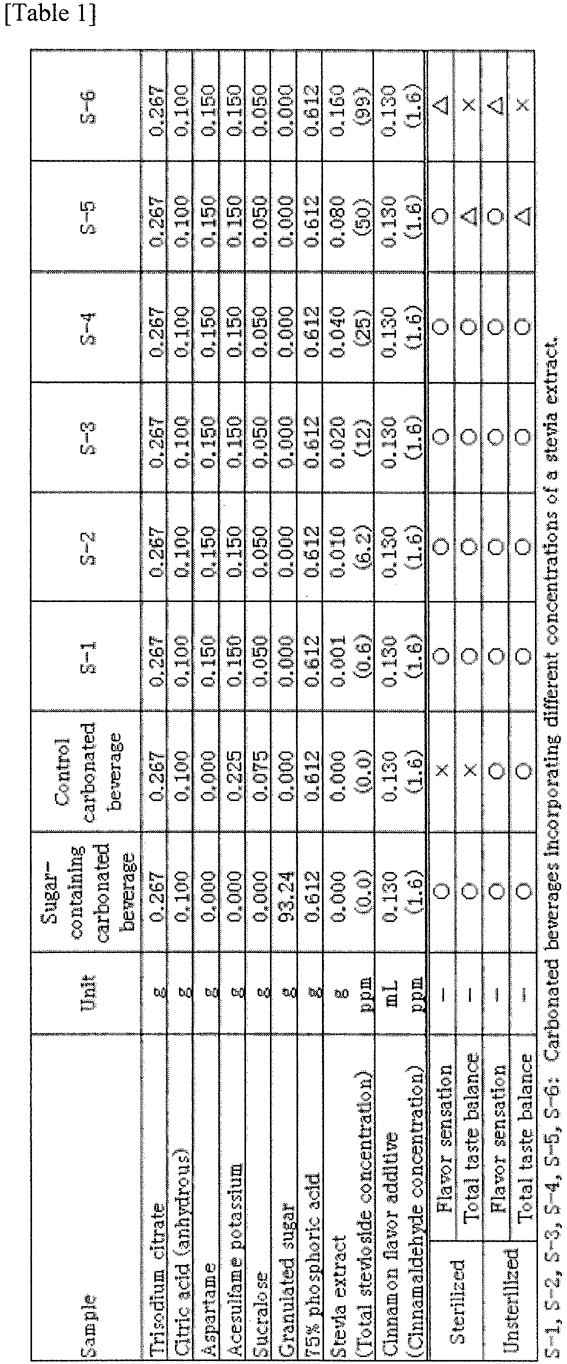

The sugar-containing carbonated beverage satisfactorily maintained its cinnamon flavor sensation and total taste balance even after sterilization treatment. In contrast, the control carbonated beverage containing not sugar but some high-intensity sweeteners showed a significant deterioration in cinnamon flavor sensation after sterilization treatment. The sterilized control beverage showed a slight deterioration in the balance of its total taste balance as compared to the unsterilized one. This reveals that the control carbonated beverage is susceptible to deterioration in cinnamon flavor sensation and total taste balance caused by heat due to the absence of a stevia extract and aspartame.

The beverages incorporating a stevia extract and aspartame were found to maintain their cinnamon flavor sensation even after sterilization treatment. This means that the presence of a stevia extract reduced the deterioration in cinnamon flavor sensation caused by heat. This effect of a stevia extract was observed over the whole concentration range tested (0.6 ppm to 99 ppm of total steviosides in carbonated beverage).

In addition, it was found that the beverages incorporating a stevia extract and aspartame also kept its total taste balance satisfactorily even after sterilization treatment. However, when the stevia extract is present at a concentration higher than 0.16 g (99 ppm in terms of total steviosides), the extract was observed to have a tendency to affect both the flavor sensation and total taste balance of the beverage.

### [Test Example 2]

According to the formulation table shown in Table 2, zero-calorie carbonated beverages incorporating a stevia extract were prepared. The concentrations of components in Table 2 are expressed as concentrations per liter of carbonated beverage. The carbonated beverages sealed in bottles were prepared using the same components as in Test Example 1, except that Steviron S-100 (a stevioside product produced by Morita Kagaku Kogyo Co., Ltd.), Rebaudio J-100 (a rebaudioside A product produced by Morita Kagaku Kogyo Co., Ltd.), or a rebaudioside D sweetener having a purity of not less than 95% was used as a stevia extract. For each type of carbonated beverage, unsterilized and sterilized samples were prepared. As for the sterilization conditions, those employed in Test Example 1 were followed. All of the beverages prepared in this test example were adjusted to pH 2.8. The beverages prepared were each evaluated for their flavor sensation and total taste balance according to the criteria defined in Test Example 1.

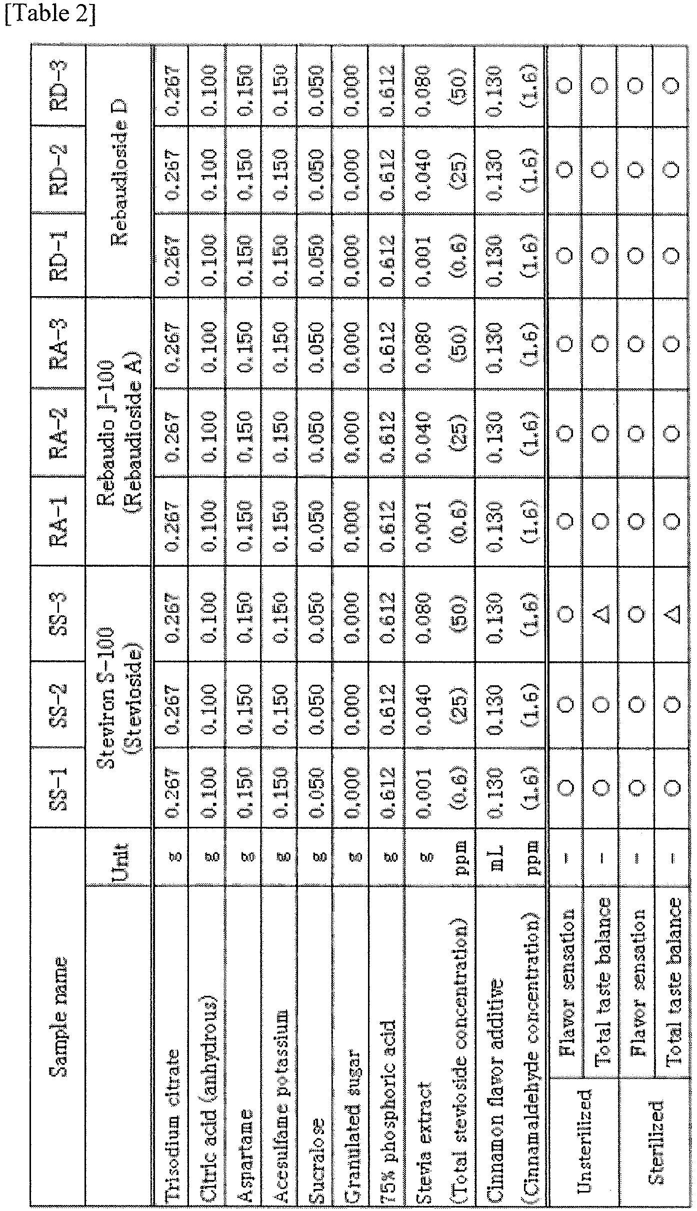

The unsterilized carbonated beverages subjected to sensory evaluation were all evaluated as mostly satisfactory in terms of flavor sensation and total taste balance. Also, the results of the evaluation of the sterilized carbonated beverages for their flavor sensation and total taste balance were almost the same as the results for the unsterilized beverages. This demonstrated that incorporating every type of the three components used as a stevia extract in combination with aspartame in a carbonated beverage reduces the deterioration in the flavor sensation and total taste balance of the carbonated beverage caused by heat. These effects were observed over the whole range of stevia extract concentrations tested.

### [Test Example 3]

The concentration of aspartame in a carbonated beverage was varied to investigate the effect of aspartame on the flavor of the carbonated beverage.

As shown in Tables 3 and 4, there were prepared zero-calorie carbonated beverages incorporating neither one or two high-intensity sweeteners nor a stevia extract, and zero-calorie carbonated beverages not containing one or two high-intensity sweeteners but incorporating a stevia extract. The concentrations of components in Tables 3 and 4 are expressed as concentrations per liter of carbonated beverage. The different zero-calorie carbonated beverages incorporating high-intensity sweeteners were prepared according to the same procedure as in Test Example 1. The thus-prepared carbonated beverages were used for evaluation as unsterilized carbonated beverages. Further, the unsterilized carbonated beverages were sterilized and cooled according to the same procedure as in Test Example 1, and the resulting samples were used for evaluation as sterilized carbonated beverages. The unsterilized and sterilized carbonated beverages were subjected to sensory evaluation according to the same procedure as in Test Example 1. All of the beverages prepared in this test example were adjusted to pH 2.8.

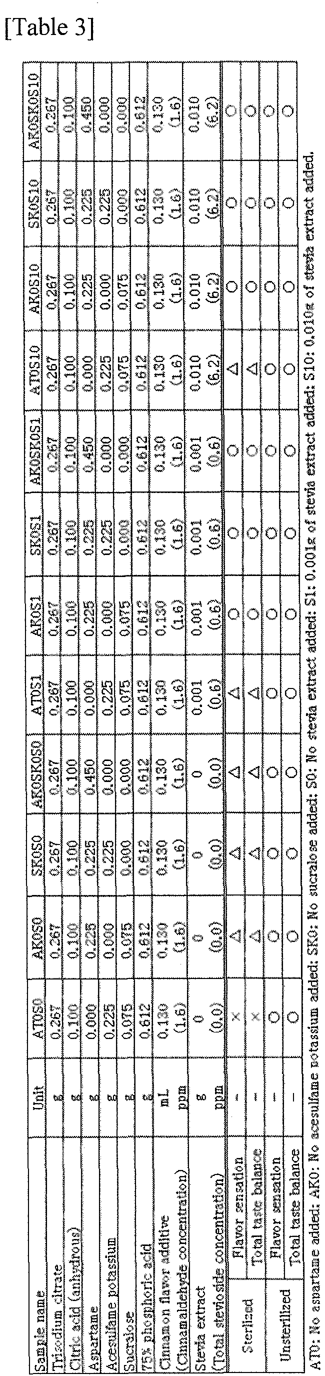

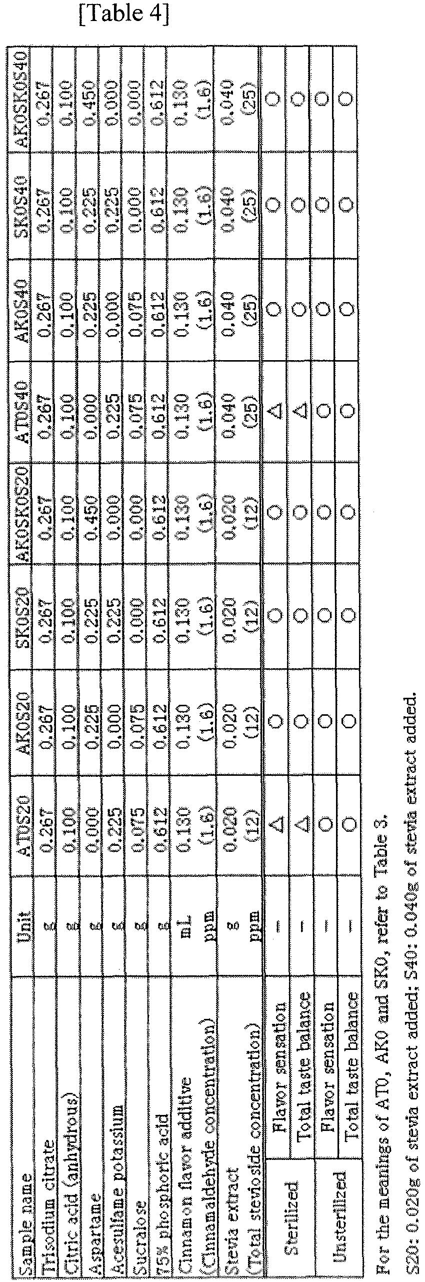

The beverages in which acesulfame potassium and/or sucralose is not incorporated showed no deterioration in cinnamon flavor sensation caused by sterilization treatment. On the other hand, the beverages not incorporating aspartame showed a deterioration in cinnamon flavor sensation caused by sterilization treatment. This reveals that, along with a stevia extract, aspartame is also necessary in reducing the deterioration in cinnamon flavor sensation caused by heat.

The sensory evaluation of the beverages incorporating, or not incorporating, a stevia extract demonstrated that, as shown in Tables 3 and 4, those beverages incorporating a stevia extract maintained both their cinnamon flavor sensation and total taste balance more satisfactorily after sterilization treatment.

The above results show that the presence of both a stevia extract and aspartame is important in reducing the deterioration in the cinnamon flavor sensation and total taste balance of a beverage caused by heat.

### [Test Example 4]

Independently of Test Examples 1 to 3, another test was conducted by varying the concentration of cinnamaldehyde in a beverage in order to determine the effect of cinnamaldehyde on the flavor of the beverage.

There were prepared stevia extract-containing zero-calorie carbonated beverages having components as shown in Table 5. The concentrations of components in Table 5 are expressed as concentrations per liter of carbonated beverage. The zero-calorie carbonated beverages incorporating high-intensity sweeteners were prepared according to the same procedure as in Test Example 1. The cinnamaldehyde concentration was adjusted to specified values by adding a cinnamon flavor. The thus-prepared carbonated beverages were used for evaluation as unsterilized carbonated beverages. Further, the unsterilized carbonated beverages were sterilized and cooled according to the same procedure as in Test Example 1, and the resulting samples were used for evaluation as sterilized carbonated beverages. The unsterilized and sterilized carbonated beverages were subjected to sensory evaluation according to the same procedure as in Test Example 1. All of the beverages prepared in this test example were adjusted to pH 2.8.

**[Table 5]**

| Component | | Unit | SA001S40 | SA002S40 | SA005S40 | SA010S40 | SA016S40 | SA032S40 | SA050S40 | SA100S40 | SA160S40 | SA320S40 |
|---|---|---|---|---|---|---|---|---|---|---|---|---|
| Trisodium citrate | | g | 0.267 | 0.267 | 0.267 | 0.267 | 0.267 | 0.267 | 0.267 | 0.267 | 0.267 | 0.267 |
| Citric acid (anhydrous) | | g | 0.100 | 0.100 | 0.100 | 0.100 | 0.100 | 0.100 | 0.100 | 0.100 | 0.100 | 0.100 |
| Aspartame | | g | 0.150 | 0.150 | 0.150 | 0.150 | 0.150 | 0.150 | 0.150 | 0.150 | 0.150 | 0.150 |
| Acesultame potassium | | g | 0.150 | 0.150 | 0.150 | 0.150 | 0.150 | 0.150 | 0.150 | 0.150 | 0.150 | 0.150 |
| Sucralose | | g | 0.050 | 0.050 | 0.050 | 0.050 | 0.050 | 0.050 | 0.050 | 0.050 | 0.050 | 0.050 |
| 75% phosphoric acid | | g | 0.612 | 0.612 | 0.612 | 0.612 | 0.612 | 0.612 | 0.612 | 0.612 | 0.612 | 0.612 |
| Stevia extract (Total stevioside concentration) | | g ppm | 0.040 (25) | 0.040 (25) | 0.040 (25) | 0.040 (25) | 0.040 (25) | 0.040 (25) | 0.040 (25) | 0.040 (25) | 0.040 (25) | 0.040 (25) |
| Cinnamaldehyde concentration | | ppm | 0.1 | 0.25 | 0.5 | 1.0 | 1.6 | 3.2 | 5.0 | 10 | 16 | 32 |
| Sterilized | Flavor sensation | - | × | Δ | Δ | ○ | ○ | ○ | ○ | ○ | ○ | Δ |
| | Total taste balance | - | ○ | ○ | ○ | ○ | ○ | ○ | ○ | ○ | Δ | × |
| Unsterilized | Flavor sensation | - | Δ | Δ | ○ | ○ | ○ | ○ | ○ | ○ | ○ | ○ |
| | Total taste balance | - | ○ | ○ | ○ | ○ | ○ | ○ | ○ | ○ | Δ | × |

| | | | | | | | | | | | | |
|---|---|---|---|---|---|---|---|---|---|---|---|---|
| SA001. 0.1ppm cinnamaldehyde added; SA002: 0.25ppm cinnamaldehyde added; SA005: 0.5ppm cinnamaldehyde added; SA010: 1ppm cinnamaldehyde added; SA016: 1.6ppm cinnamaldehyde added; SA032: 3.2ppm cinnamaldehyde added; SA050: 5.0ppm cinnamaldehyde added; SA100: 10ppm cinnamaldehyde added; SA160: 16ppm cinnamaldehyde added; SA320: 32ppm cinnamaldehyde added. For the meaning of S40, refer to Table 4. | | | | | | | | | | | | |

Comparison of the sensory evaluation results given in Table 5 shows that there is an appropriate range of concentration of cinnamaldehyde to be added. When cinnamaldehyde was added at a concentration of 0.1 ppm, the flavor sensation of the beverage after sterilization treatment was unfavorable. When cinnamaldehyde was added at a concentration of 0.25 ppm, the cinnamon flavor sensation of the beverage was maintained even after sterilization treatment. The above results reveal that in order to maintain a flavor sensation, it is preferable to add cinnamaldehyde at a concentration of not less than 0.25 ppm.

From the perspective of total taste balance, the lower limit of concentration of cinnamaldehyde to be added was found to be 0.25 ppm. A beverage incorporating cinnamaldehyde at too high a concentration had a tendency to be evaluated as unsatisfactory in terms of total taste balance. The results given in Table 5 show that the beverages incorporating cinnamaldehyde at a concentration of not more than 16 ppm were evaluated as favorable in terms of total taste balance. On the other hand, the beverage incorporating cinnamaldehyde at a concentration of 32 ppm was perceived as not very favorable in terms of total taste balance.

The above results revealed that, in consideration of both flavor sensation and total taste balance, it is preferable to add cinnamaldehyde at a concentration of 0.25 ppm to 16 ppm.

### [Test Example 5]

An accelerated aging test was conducted by varying the concentrations of cinnamaldehyde and a stevia extract in a beverage in order to determine the effect of incorporating a stevia extract on the temporal deterioration of cinnamaldehyde. All of the beverages prepared in this test example were adjusted to pH 2.8.

There were prepared stevia extract-containing zero-calorie carbonated beverages having components as shown in Table 6. The concentrations of components in Table 6 are expressed as concentrations per liter of carbonated beverage. The zero-calorie carbonated beverages incorporating high-intensity sweeteners were prepared according to the same procedure as in Test Examples 1 and 4. The prepared carbonated beverages were used for evaluation as unsterilized carbonated beverages, and stored at 5°C or 55°C. The samples stored at 5°C or 55°C were each subjected to sensory evaluation. It should be noted that storage at 55°C corresponds to storage at ordinary temperatures for about one month.

**[Table 6]**

| Sample | | Unit | SA005S0 | SA016S0 | SA005S01 | SA016S01 | SA005S40 | SA16S40 |
|---|---|---|---|---|---|---|---|---|
| Trisodium citrate | | g | 0.267 | 0.267 | 0.267 | 0.267 | 0.267 | 0.267 |
| Citric acid (anhydrous) | | g | 0.100 | 0.100 | 0.100 | 0.100 | 0.100 | 0.100 |
| Aspartame | | g | 0.150 | 0.150 | 0.150 | 0.150 | 0.150 | 0.150 |
| Acesulfame potassium | | g | 0.150 | 0.150 | 0.150 | 0.150 | 0.150 | 0.150 |
| Sucralose | | g | 0.050 | 0.050 | 0.050 | 0.050 | 0.050 | 0.050 |
| 75% phosphoric acid | | g | 0.612 | 0.612 | 0.612 | 0.612 | 0.612 | 0.612 |
| Stevia extract (Total stevioside concentration) | | g ppm | 0.000 (0.0) | 0.000 (0.0) | 0.001 (0.6) | 0.001 (0.6) | 0.040 (25) | 0.040 (25) |
| Cinnamon flavor additive (Cinnamaldehyde concentration) | | mL ppm | 0.040 (0.5) | 0.130 (1.6) | 0.040 (0.5) | 0.130 (1.6) | 0.040 (0.5) | 0.130 (1.6) |
| Stored at 5°C | Flavor | - | ○ | ○ | ○ | ○ | ○ | ○ |
| | Total taste balance | - | ○ | ○ | ○ | ○ | ○ | ○ |
| Stored at 55°C | Flavor | - | × | × | Δ | ○ | Δ | ○ |
| | Total taste balance | - | × | Δ | ○ | ○ | ○ | ○ |

| | | | | | | | | |
|---|---|---|---|---|---|---|---|---|
| For the meanings of SA005, SA016, S0, S01 and S40, refer to Tables 4 and 5. | | | | | | | | |

The samples incorporating no stevia extract were evaluated as unsatisfactory in terms of total taste balance since deterioration of cinnamaldehyde was perceived. On the other hand, the samples incorporating a stevia extract at a concentration of 0.001 g/L (0.6 ppm in terms of total steviosides) were evaluated as satisfactory in terms of total taste balance since reduced deterioration of cinnamaldehyde was perceived. The intended effect was observed in every sample incorporating a stevia extract, but the sample having the most noticeable effect was the one incorporating a stevia extract at a concentration 0.04 g/L (25 ppm in terms of total steviosides) and cinnamaldehyde at a concentration of 1.6 ppmreduced deterioration of cinnamaldehyde was most intensely perceived from this sample. The above results revealed that incorporating a stevia extract and aspartame in a carbonated beverage is also effective on the temporal stability of cinnamaldehyde.

## Claims

1. A carbonated beverage comprising cinnamaldehyde and high-intensity sweeteners, wherein at least aspartame and a stevia extract are contained as the high-intensity sweeteners, and wherein total steviosides are contained as the stevia extract.

2. The carbonated beverage according to claim 1, wherein the total steviosides are contained as the stevia extract at a concentration of 0.6 ppm to 50 ppm.

3. The carbonated beverage according to claim 1 or 2, wherein the cinnamaldehyde is contained at a concentration of 0.25 ppm to 16 ppm.

4. The carbonated beverage according to any one of claims 1 to 3, wherein the cinnamaldehyde is contained at a concentration of 1.0 ppm to 10 ppm.

5. The carbonated beverage according to any one of claims 1 to 4, wherein the carbonated beverage is a low-calorie beverage.

6. The carbonated beverage according to any one of claims 1 to 5, wherein the carbonated beverage has a pH of not more than 3.3.

7. The carbonated beverage according to any one of claims 1 to 6, wherein the aspartame is contained at a concentration of not less than 0.05 g/L.

8. A method for producing a low-calorie carbonated beverage, the method comprising the steps of: dissolving cinnamaldehyde and high-intensity sweeteners in water, wherein the high-intensity sweeteners comprise at least aspartame and a stevia extract, and wherein the stevia extract comprises total steviosides, and performing sterilization.

## Patentansprüche

1. Ein kohlensäurehaltiges Getränk, umfassend Zimtaldehyd und hochintensive Süßstoffe, wobei mindestens Aspartam und ein Stevia-Extrakt als die hochintensiven Süßstoffe enthalten sind, und wobei die gesamten Stevioside als der Stevia-Extrakt enthalten sind.

2. Das kohlensäurehaltige Getränk gemäß Anspruch 1, wobei die gesamten Stevioside als der Stevia-Extrakt in einer Konzentration von 0,6 ppm bis 50 ppm enthalten sind.

3. Das kohlensäurehaltige Getränk gemäß Anspruch 1 oder 2, wobei der Zimtaldehyd in einer Konzentration von 0,25 ppm bis 16 ppm enthalten ist.

4. Das kohlensäurehaltige Getränk gemäß einem der Ansprüche 1 bis 3, wobei der Zimtaldehyd in einer Konzentration von 1,0 ppm bis 10 ppm enthalten ist.

5. Das kohlensäurehaltige Getränk gemäß einem der Ansprüche 1 bis 4, wobei das kohlensäurehaltige Getränk ein kalorienarmes Getränk ist.

6. Das kohlensäurehaltige Getränk gemäß einem der Ansprüche 1 bis 5, wobei das kohlensäurehaltige Getränk einen pH-Wert von nicht mehr als 3,3 aufweist.

7. Das kohlensäurehaltige Getränk gemäß einem der Ansprüche 1 bis 6, wobei das Aspartam in einer Konzentration von nicht weniger als 0,05 g/l enthalten ist.

8. Ein Verfahren zur Herstellung eines kalorienarmen kohlensäurehaltigen Getränks, wobei das Verfahren die Schritte umfasst: Lösen von Zimtaldehyd und hochintensiven Süßstoffen in Wasser, wobei die hochintensiven Süßstoffe mindestens Aspartam und einen Stevia-Extrakt umfassen und wobei der Stevia-Extrakt die gesamten Stevioside umfasst, und Durchführen einer Sterilisation.

## Revendications

1. Boisson gazeuse comprenant du cinnamaldéhyde et des édulcorants intenses, dans laquelle au moins de l'aspartame et un extrait de stévia sont contenus en tant qu'édulcorants intenses, et dans laquelle la totalité des stéviosides sont contenus en tant qu'extrait de stévia.

2. Boisson gazeuse selon la revendication 1, dans laquelle la totalité des stéviosides sont contenus en tant qu'extrait de stévia à une concentration de 0,6 ppm à 50 ppm.

3. Boisson gazeuse selon la revendication 1 ou 2, dans laquelle le cinnamaldéhyde est contenu à une concentration de 0,25 ppm à 16 ppm.

4. Boisson gazeuse selon l'une quelconque des revendications 1 à 3, dans laquelle le cinnamaldéhyde est contenu à une concentration de 1,0 ppm à 10 ppm.

5. Boisson gazeuse selon l'une quelconque des revendications 1 à 4, dans laquelle la boisson gazeuse est une boisson peu calorique.

6. Boisson gazeuse selon l'une quelconque des revendications 1 à 5, dans laquelle la boisson gazeuse a un pH non supérieur à 3,3.

7. Boisson gazeuse selon l'une quelconque des revendications 1 à 6, dans laquelle l'aspartame est contenu à une concentration non inférieure à 0,05 g/l.

8. Procédé de production d'une boisson gazeuse peu calorique, le procédé comprenant les étapes de : dissolution de cinnamaldéhyde et d'édulcorants intenses dans l'eau, dans lequel les édulcorants intenses comprennent au moins de l'aspartame et un extrait de stévia, et dans lequel l'extrait de stévia comprend la totalité des stéviosides, et réalisation d'une stérilisation.
